# EUROPEAN PATENT APPLICATION

(11) **EP 3 070 325 A1**
(43) Date of publication of application: **21.09.2016**
(21) Application number: 15159638.4
(22) Date of filing: 18.03.2015
(51) Int. Cl.: F03B 11/00, F03B 13/10, F03B 13/26

(54) **RETRIEVAL MECHANISM OF SUBSEA TURBINES USING A COMPRESSED FLUID**

(71) Applicant: Siemens Aktiengesellschaft, 80333 München (DE)
(72) Inventor: Schwensen, Sven, 80798 München (DE)

(57) **Abstract**

It is described an arrangement for lifting a subsea turbine, which is arranged subsea, to a water surface. The arrangement comprises the subsea turbine arrangeable below the water surface, a lifting body having a lifting volume, wherein the lifting body is coupled to the subsea turbine, and at least one lifting fluid container containing a compressed lifting fluid. Furthermore, the lifting body is coupled to the at least one lifting fluid container such that the lifting volume of the lifting body is feedable with the lifting fluid of the at least one lifting fluid container for generating a buoyancy force so that the subsea turbine is lifted to the water surface.

## Description

### Field of invention

The present invention relates to the field of subsea turbines. More particularly, the present invention relates to the field of lifting a subsea turbine to the water surface.

### Art Background

Tidal power is a relatively new form of renewable energy. It generates electricity from tidal currents by placing a tidal turbine (i.e. a powertrain with blades; similar to a wind turbine) subsea. The tidal turbine is usually mounted on or coupled to a supporting device placed in or on a seabed.

Yet, for service and maintenance purposes the tidal turbine has to be retrieved, i.e. raised above sea level.

There is a need for tidal power service and maintenance companies to cost-efficiently retrieve submerged tidal turbines for service and maintenance purposes.

One principle is to retrieve the tidal turbine with a vessel. A crane on a heavy-load vessel is used to retrieve the tidal turbine. This may be complex as the availability of those vessels is limited and the costs are high.

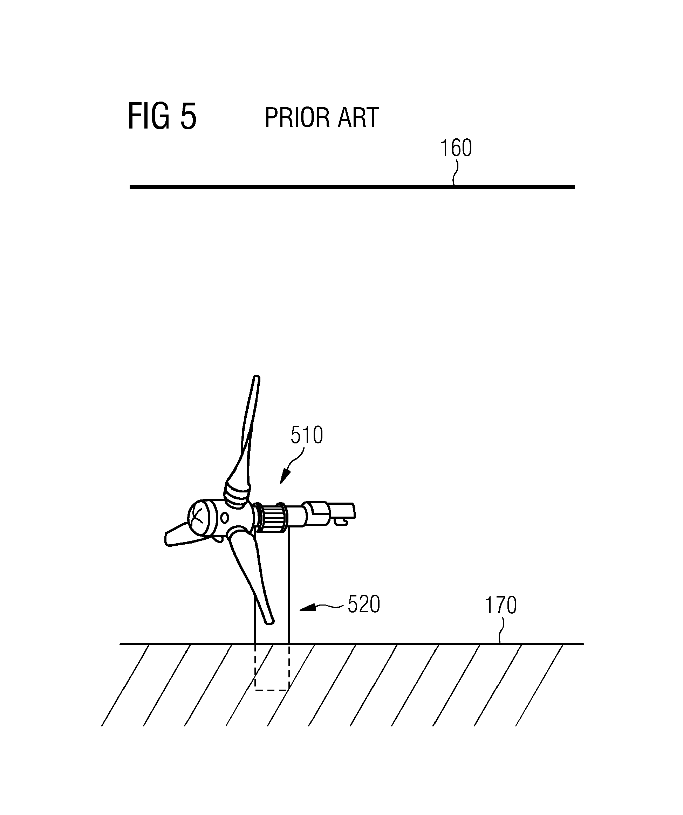

Figure 5 shows a prior art example of a conventional subsea turbine 510 which is mounted on a conventional monopile 520 placed in a sea bed. For service and maintenance purposes, the conventional subsea turbine 510 has to be retrieved for example by a crane on a heavy-load vessel.

Another principle is to retrieve the tidal turbine via buoyancy mechanism. A remote operated vehicle (ROV) is used to pump air into the tidal turbine to uplift the tidal turbine to water level. The advantage of this concept is that no vessel is needed, but a small barge is sufficient to tow the floating tidal turbine to the service harbor.

However, the process of getting air into the tidal turbine is still not solved satisfyingly.

Thus, there may be a need for an arrangement and a method for lifting a subsea turbine, which is arranged subsea, to the water surface using robust and cost-efficient technology.

### Summary of the Invention

This need may be met by an arrangement for lifting a subsea turbine and by a method for lifting a subsea turbine according to the subject matters of the independent claims. Advantageous embodiments of the present invention are described by the dependent claims.

According to a first aspect of the invention there is provided an arrangement for lifting a subsea turbine, which is arranged subsea, to a water surface. The arrangement comprises the subsea turbine arrangeable below the water surface, a lifting body having a lifting volume, wherein the lifting body is coupled to the subsea turbine, and at least one lifting fluid container containing a compressed lifting fluid. Furthermore, the lifting body is coupled to the at least one lifting fluid container such that the lifting volume of the lifting body is feedable with the lifting fluid of the at least one lifting fluid container for generating a buoyancy force so that the subsea turbine is lifted to the water surface.

According to a further embodiment of the invention there is provided a method for lifting a subsea turbine, which is arranged subsea, to a water surface. The method comprises the step of feeding a lifting volume of a lifting body with a lifting fluid of an at least one lifting fluid container for generating a buoyancy force so that the subsea turbine is lifted to the water surface. Hereby, the lifting body is coupled to the subsea turbine and the at least one lifting fluid container contains the compressed lifting fluid.

This aspect of the invention is based on the idea that a subsea turbine can be lifted to the water surface by the compressed lifting fluid of the lifting fluid container in a robust and cost-efficient manner.

The term "subsea turbine" may refer to a turbine which is arranged subsea. The subsea turbine may be mounted to a ground by a supporting device, for example a monopile, a tripod or a gravity-based foundation. The subsea turbine may as well be mounted directly to the seabed or attached to an arrangement of several subsea turbines, e.g. a tower or a column. The subsea turbine can also be arranged within a tidal power plant.

The term "lifting body" may refer to a body with a lifting volume which can be fed with a lifting fluid. The lifting body may be realized as a, e.g. inflatable, balloon. In this case, the lifting body may be made of an elastic and flexible material. In another embodiment, the lifting body may be realized as a, e.g. stiff, container, which may be coupled to the subsea turbine. In another embodiment, the lifting body may be part of the subsea turbine, e.g. a cavity or a void formed within the subsea turbine. The lifting body may be manufactured from e.g. synthetic material such as plastic as well as metal. Preferably, the lifting body is made of a waterproof material.

The term "buoyance force" may refer to an upward force exerted by a fluid that opposes the weight of an immersed object. In a column of fluid, pressure increases with depth as a result of the weight of the overlying fluid. Thus, a column of fluid, or an object submerged in the fluid, experiences greater pressure at the bottom of the column than at the top. This difference in pressure results in a net force that tends to accelerate an object upwards. This is also called Archimedes' principle.

In the case of the present invention, a lifting volume of a lifting body may be arranged for being fed by a lifting fluid from at least one lifting fluid container to an extent that the buoyancy force F_{A} of the lifting body is larger than the weight force of the immersed subsea turbine. Further, the lifting body is lifting a subsea turbine to a water surface, when the buoyancy force F_{A} of the lifting body is larger than the weight force of the subsea turbine.

In the following an example for a corresponding calculation (rounded) is provided. If a subsea turbine (density of salt water is 1025 kg/m³) has
a weight of m = 80000 kg, and
a volume of height x width x length = 3 m x 3 m x 5 m, and
a lifting body has a weight of m = 1000 kg, and
a volume (inflated) of height x width x length = 2.5 m x 2.5 m x 8 m, then
the buoyancy force F_{A} = F_{A} (lifting body) + F_{A} (turbine) = 2.5 m x 2.5 m x 8 m x 9.81 N/kg x 1025 kg/m³ + 3 m x 3 m x 5 m x 9.81 N/kg x 1025 kg/m³ = 500000 N + 450000 N = 950000 N.
The weight force F_{G} = F_{G} (lifting body) + F_{G} (turbine) = 1000 kg x 9,81 N/kg + 80000 kg * 9,81 N/kg = 800000 N.
Because 950000 N > 800000 N, the buoyancy force F_{A} is larger than the weight force F_{G} (F_{A} > F_{G}) and thus, the arrangement is lifted to the water surface.

The term "lifting fluid" may refer to any kind of fluid which is capable to be fed into a lifting volume of a lifting body and generates a buoyancy force so that the lifting body is lifted to a water surface. In principle, fluids are only capable of doing so, if their density is lower than the density of water, in particular sea water (approximately 1025 kg/m³). In order to be compressible, the lifting fluid is preferentially a gas, for example air. Air is also very cost-efficient. But also many other gases such as nitrogen, oxygen or methane are possible.

Lifting a subsea turbine for service and maintenance purposes with uncompressed air by a conventional ROV is inefficient. Hence, by the approach of the present invention compressed lifting fluid (air) is injected into the lifting fluid container, wherein the lifting fluid container may be for example installed close to the subsea turbine subsea. Hence, an effective and cost saving lifting process for subsea turbines is provided.

According to a further embodiment of the invention, the subsea turbine is a subsea tidal turbine.

The term "subsea tidal turbine" may refer to a turbine which uses the force of the tides. As the direction of the tidal current changes with time, also the subsea tidal turbine itself or its blades have to be turned according to the tide in order to be most efficient. Thus, either the subsea tidal turbine, or a supporting device on which the subsea tidal turbine is mounted has to be rotatable or the blades have to be pitchable. This principle is similar to the principle of a wind turbine, which has to be turned or the blades have to be pitchable in order to use the wind energy most efficiently. The subsea tidal turbine may be mounted on a supporting device and there is a plurality of methods how this can be done. For example, a part of the turbine is imposed over a part of the supporting device or vice versa. There are also many different ways how to attach the turbine to the supporting device, for example by a snapping mechanism. The weight of a tidal turbine may be for example 80.000 kg. The volume of a tidal turbine may be for example 3 m in height, 3 m in width, and 5 m in length.

According to a further embodiment of the invention, the at least one lifting fluid container is a compressed fluid cylinder.

The term "lifting fluid container" may refer to any kind of container, being capable to store a compressed fluid. In the simplest embodiment the lifting fluid container may be a bottle. In another embodiment, the container may be a compressed fluid cylinder, an air tank, a pressure vessel, or a propellant gas bottle. There may be just one lifting fluid container or a plurality of lifting fluid containers, for example at least 3, 10 or 30. The pressure of the compressed fluid within a compressed fluid cylinder may be between 100 and 300 bar, in particular 200 bar. The compressed fluid cylinder may store a volume of 100-200 liters of the compressed lifting fluid.

If a subsea turbine is installed in a water depth of 50 m, where the pressure is approximately 6 bar (p1), and the compressed fluid cylinder may store compressed fluids at a compressed pressure of approximately 200 bar (p2), then in order to lift a lifting body with a volume of e.g. approximately 50 m³ (V1), a volume (V2) of approximately at least 1,5 m³ of compressed lifting fluid would be needed. This calculation follows the law of Boyle-Mariotte (p1/p2 = V2/V1). Thus, if one compressed fluid cylinder may store approximately 150 liters, then 10 compressed fluid cylinders would be needed.

The at least one lifting fluid container may be coupled and/or directly attached to the subsea turbine or the lifting body. This can be done for example during installation of the subsea turbine in a subsea environment. In another embodiment, the lifting body and the at least one lifting fluid container are an integrated module and are housed e.g. in one common housing.

This has the advantage that the lifting fluid is in spatial proximity to the lifting body and the subsea turbine. In this manner it is not necessary to transport the lifting fluid additionally in a cost-inefficient manner, for example with a subsea vessel to the lifting body.

According to a further embodiment of the invention, the lifting body is formed inflatable such that the lifting volume is inflatable by the lifting fluid.

In this embodiment, the lifting body is arranged as a balloon which can be inflated using the lifting fluid. The balloon may be foldable and flat in order to require minimal space. In this manner the flat balloon may be arranged in a box attached to the subsea turbine. Only when filled with the lifting fluid, the balloon may be inflated and reach a large size. The balloon may be made of a waterproof material which is elastic and flexible such as a synthetic material like plastic or rubber. The size of the inflated lifting body may be approximately 2 to 3 meters in height, 2 to 3 meters in width, and 7 to 9 meters in length.

This may have the advantage that the lifting body does not require a lot of space when being stored close to the subsea turbine.

According to a further embodiment of the invention, the lifting body is coupled to the subsea turbine by connecting straps.

Connecting straps may be applied to couple the lifting body to the subsea turbine. These connecting straps may be all kinds of strong connecting means. For example the connecting straps may be made of iron or steel and may be realized as massive chains. In another embodiment, the straps can be realized as traction cables, wire rope or wire cable. Besides metal, the chains may also be made of a synthetic material such as fiber-glass reinforced plastic or carbon reinforced plastic.

This has the advantage that the lifting body is strongly attached to the subsea turbine. Also, the connecting straps provide more flexibility during the uplift of the subsea turbine than in the case that the subsea turbine would be directly attached to the lifting body.

According to a further embodiment of the invention, the lifting body is arranged within the subsea turbine.

There may be a hollow part such as a cavity or a void within the subsea turbine, which can accommodate a lifting volume. This lifting volume can then be fed by the lifting fluid. In this embodiment, the lifting body is an inner part of the subsea turbine. In another embodiment, the lifting body may be a container arranged on top or at the side of the subsea turbine.

This has the advantage that no additional lifting body has to be attached to the subsea turbine, because the lifting body is already a part of the subsea turbine.

According to a further embodiment of the invention, the at least one lifting fluid container is coupled with the lifting body via a filling hose.

The filling hose may be a flexible hollow tube arranged to carry fluids from one location to another. The filling hose may be a compressed air hose. The hose may be made of typical material such as nylon, polyurethane, polyethylene, PVC, or synthetic or natural rubbers, polyethylene, Teflon, and many more. The filling hose can as well be made of a metal, e.g. steel. The filling hose may connect an outlet of the lifting fluid container with an inlet of the lifting body. In this embodiment, the inlet and outlet may be equipped with valves. The filling hose may additionally be stabilized with stabilizing means, for example a chain.

This has the advantage that the lifting body and the at least one lifting fluid container may be arranged spaced apart from each other, e.g. spaced apart at the ground subsea. This results in more flexibility regarding the spatial arrangement of the at least one container and the lifting body.

According to a further embodiment of the invention, the lifting fluid is a compressed gas, in particular compressed air.

The lifting fluid has to be compressed, which means that normally gas is applied as a lifting fluid. Air has the advantage that it is very cost-efficient and also environmentally friendly and does likely not need further environmental permits.

According to a further embodiment of the invention, the at least one lifting fluid container is attached to the subsea turbine.

The at least one lifting fluid container may be attached to the subsea turbine for example during installation of the subsea turbine. This has the advantage that no additional underwater work is necessary. In another embodiment, the at least one lifting fluid container and the lifting body are integrated into one lifting module. This lifting module may be attached to the subsea turbine. This has the advantage, that no additional underwater work is necessary. Also, the module may be easily exchanged in the case that the subsea turbine has been lifted, maintained and is again let down to a subsea operating environment.

According to a further embodiment of the invention, the arrangement further comprises a further subsea turbine arrangeable below the water surface, and a further lifting body having a further lifting volume, wherein the further lifting body is coupled to the further subsea turbine. Furthermore, the further lifting body is coupled to the at least one lifting fluid container such that the lifting volume of the further lifting body is feedable with the lifting fluid of the at least one lifting fluid container for generating a buoyancy force so that the further subsea turbine is lifted to the water surface.

In this embodiment, the lifting fluid container may be arranged in e.g. a container box. The container box may be placed and/or fixed to the seabed and may be connected to a plurality of lifting bodies coupled to a plurality of subsea turbines. The at least one lifting fluid container may as well be placed on a subsea vehicle such as a submarine or simply float close to the seabed. In this manner, a plurality of lifting volumes of a plurality of lifting bodies of respective subsea turbines can be fed with the lifting fluid by one common lifting fluid container efficiently. By feeding the lifting fluid into a plurality of lifting volumes of lifting bodies coupled to subsea turbines, a plurality of subsea turbines may at once be lifted to the water surface. However, it may also be possible to lift one subsea turbine after the other to the water surface.

This may have the advantage that even a larger turbine park comprising a plurality of subsea turbines can be maintained easily by controlling just one container box with at least one lifting fluid container. Further, it may also be possible to apply a plurality of container boxes to a plurality of subsea turbines. However, a plurality of container boxes may also be applied for just one subsea turbine.

According to a further embodiment of the invention, the method further comprises the steps of towing the turbine, which has been lifted to the water surface, with a vehicle to a maintenance location and maintaining the subsea turbine. Once the subsea turbine has been lifted to the water surface, a small boat such as a barge can tow the turbine easily to the next harbor or maintaining location.

According to a further embodiment of the invention, the method further comprises the steps of refilling the lifting fluid into the at least one lifting fluid container, emptying the lifting body, and letting the turbine down to a subsea operation location.

After the turbine is maintained, the turbine is ready to be placed under the water surface again. The at least one lifting fluid container has to be refilled with new compressed lifting fluid. Further, the lifting body has to be emptied in order to be feedable again. Afterwards, the subsea turbine is ready to be applied under water again. For example, a vehicle can tow the subsea turbine back to its operation location. The lifting fluid container may then be already refilled. Also, the lifting fluid may be removed from the lifting body and the turbine will sink below the water surface and can be directed while sinking and then be installed in a subsea environment. The subsea turbine can now operate again until the next maintenance has to be done and the above described procedure may be redone. In another embodiment, the lifting body and the at least one lifting fluid container are integrated into a lifting module. In this manner, the lifting module may be exchanged with a new lifting module. This provides a very time-efficient way to prepare the subsea turbine for being placed underwater again.

Summarizing the present invention, a subsea turbine may be lifted based on a buoyancy concept to sea level by a buoyancy force and afterwards the subsea turbine may be towed the floating tidal turbine to the service harbor for service and maintenance. Unlike existing solutions as described in the background section, the present invention uses compressed air and a lifting (i.e. a floating) body to lift the subsea turbine to sea level. The arrangement according to the present invention may work in an exemplary embodiment as follows:
i) During installation, the subsea turbine is being equipped with compressed air cylinders and an interfolded floating body attached to the subsea turbine connected by connection straps.
ii) When the subsea turbine has to be retrieved for service and maintenance purposes, the compressed air cylinders are activated remotely and inflate the floating body to an extent that the buoyancy force F_A > 0 (i.e. the buoyancy force F_A is larger than the sum of the weight of the tidal turbine); then the subsea turbine will start rising to the surface. iii) The subsea turbine and the floating body can be towed with a small barge to the service harbor where - after service and maintenance works - the compressed air cylinders are refilled and the floating body is deflated and re-attached to the tidal turbine before installation.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

### Brief Description of the Drawing

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
Figure 1 shows an arrangement for lifting a subsea turbine according to an exemplary embodiment of the present invention, wherein the subsea turbine is coupled to a lifting body by connecting straps.
Figure 2 shows an arrangement for lifting a subsea turbine according to another exemplary embodiment of the present invention, wherein the subsea turbine is coupled directly to a lifting body.
Figure 3 shows an arrangement for lifting a subsea turbine according to another exemplary embodiment of the present invention, wherein the subsea turbine is coupled to the lifting body by connecting straps and wherein the compressed fluid is streamable between a lifting body and a lifting fluid container.
Figure 4 shows an arrangement for lifting a subsea turbine according to another exemplary embodiment of the present invention, wherein two lifting bodies of two subsea turbines are coupled to a container box which comprises at least one lifting fluid container.
Figure 5 shows a subsea turbine arranged subsea according to a prior art example.

### Detailed Description

The illustration in the drawing is schematically. It is noted that in different figures, similar or identical elements or features are provided with the same reference signs.

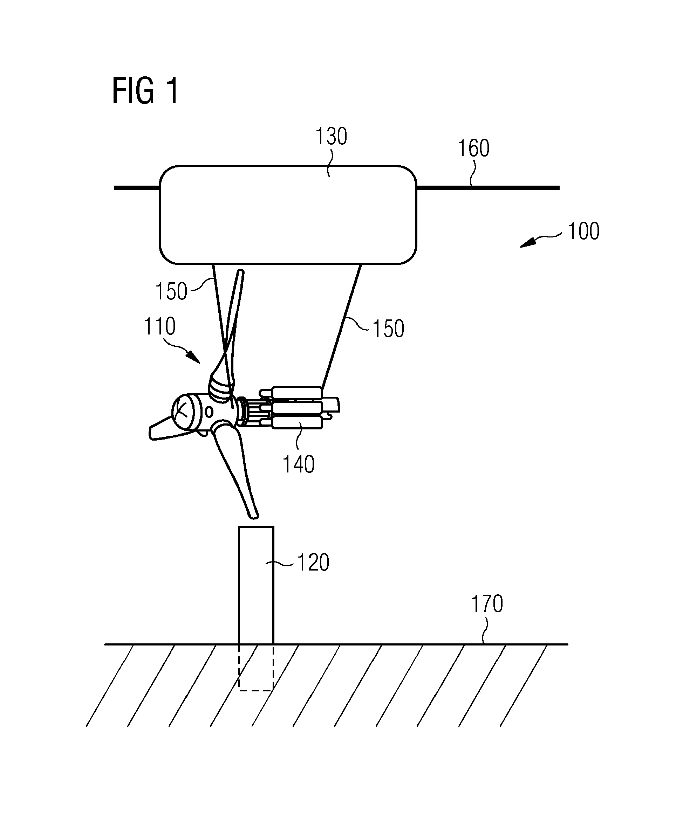

Figure 1 shows an arrangement 100 for lifting a subsea turbine 110, which is arranged subsea 170, to a water surface 160. The arrangement comprises the subsea turbine 110 arrangeable below the water surface, a lifting body 130 having a lifting volume, wherein the lifting body 130 is coupled to the subsea turbine 110, and at least one lifting fluid container 140 containing a compressed lifting fluid. The lifting body 130 is coupled to the at least one lifting fluid container 140 such that the lifting volume of the lifting body 130 is feedable with the lifting fluid of the at least one lifting fluid container 140 for generating a buoyancy force so that the subsea turbine 110 is lifted to the water surface (water level) 160.

The subsea turbine 110 is mounted on a monopile 120 which is placed into the seabed 170. When the subsea turbine 110 is lifted to the surface, the coupling to the monopile 120 is released. A plurality of lifting fluid containers 140, for example three, are coupled to the subsea turbine 110. The coupling may be for example done during installation of the subsea turbine 110. The lifting body 130 is coupled to the subsea turbine 110 with connecting straps 150, such as chains. The lifting body 130 is a floating balloon with a lifting volume. The lifting volume of the lifting balloon 130 is filled with the lifting fluid and the lifting balloon 130 rises to the water surface. In this manner, the subsea turbine 110 will be lifted to the water surface as well.

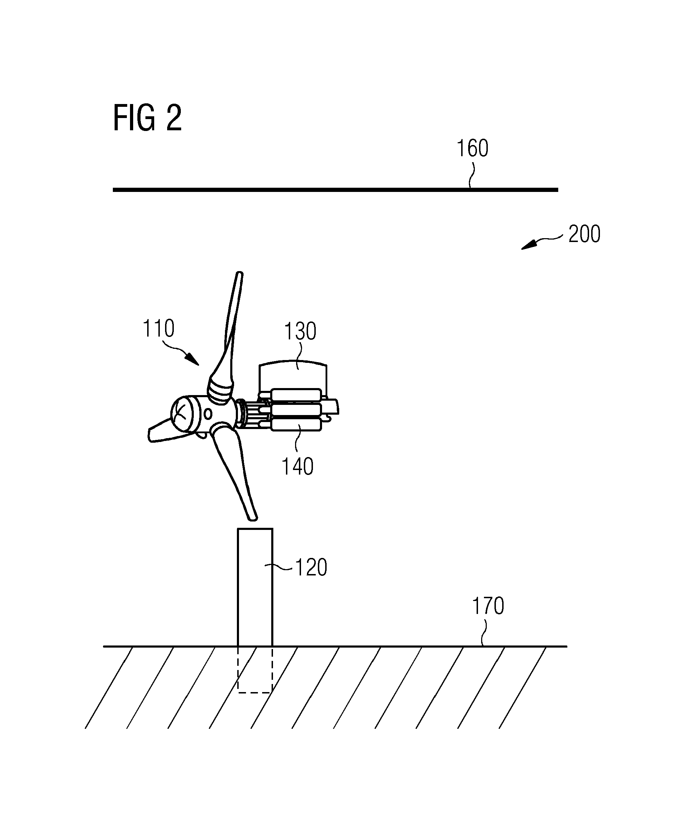

Figure 2 shows another arrangement 200 for lifting a subsea turbine according to another exemplary embodiment of the present invention. The difference to the example shown in Figure 1 is that a lifting body 130 is arranged as part of a subsea turbine 110 and is not arranged spaced apart with respect to the subsea turbine 110. In particular, the lifting body 130 is a container 130 attached on top of the subsea turbine 110. Further, the lifting body 130 is directly coupled to the at least one lifting fluid container 140.

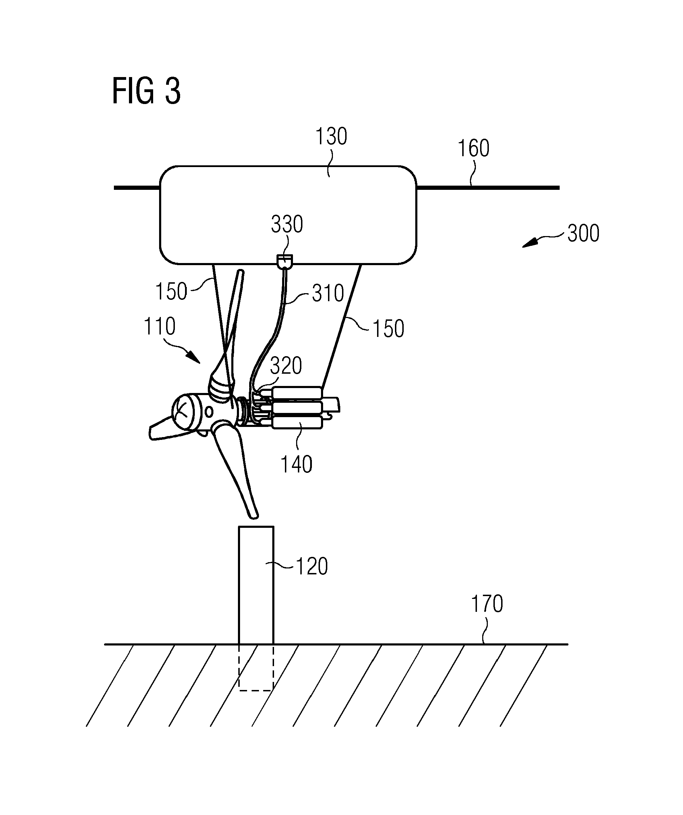

Figure 3 shows another arrangement 300 for lifting a subsea turbine according to another exemplary embodiment of the present invention. Here, at least one lifting fluid container 140 is arranged spaced apart with respect to the subsea turbine 110 and is coupled via a filling hose 310 to a lifting body 130. The at least one lifting fluid container 140 comprises a lifting fluid outlet 320 and the lifting body 130 comprises a lifting fluid inlet 330. In this manner, the lifting volume of the lifting body 130 may be fed by a lifting fluid from the compressed lifting fluid container 140 via the filling hose 310.

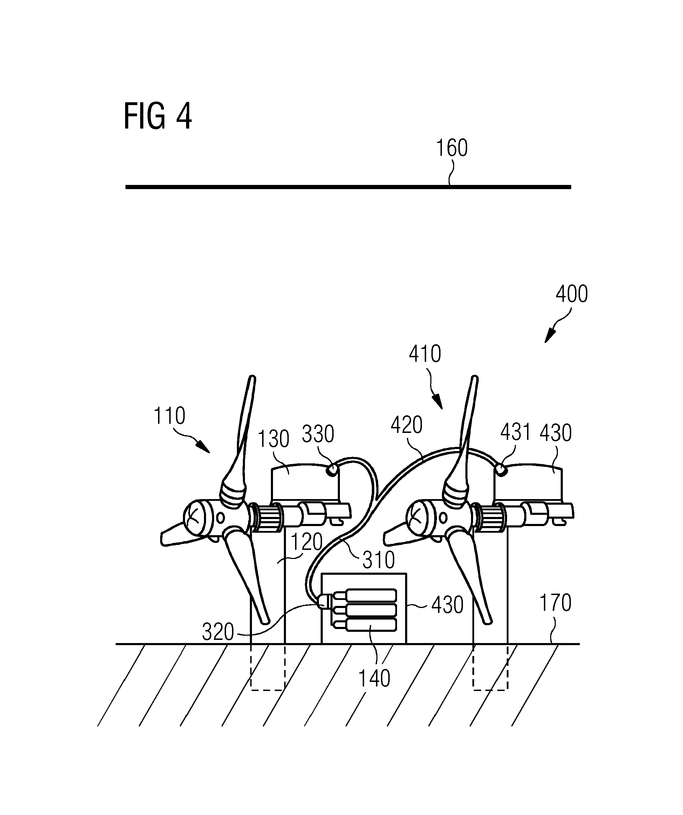

Figure 4 shows another arrangement 400 for lifting a subsea turbine according to another exemplary embodiment of the present invention. A container box 450, comprising at least one lifting fluid container 140, is placed on the seabed. The container box 450 comprises a compressed lifting fluid outlet 320 which is connected via a filling hose 310 to a lifting fluid inlet 330 of a lifting body 130. The lifting body 130 is coupled to a subsea turbine 110. The filling hose 310 is split into a further filling hose connection 420 which is coupled to a further lifting fluid inlet 431 of a further lifting body 430. The further lifting body 430 is coupled to a further subsea turbine 410. In this manner, the at least one lifting fluid container 140 in the container box 450 can feed a plurality of lifting volumes of lifting bodies 130, 430 via the filling hose 310, 420 so that a plurality of subsea turbines 130, 430 can be lifted to the water surface simultaneously or one after another.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

## Claims

1. An arrangement (100) for lifting a subsea turbine (110), which is arranged subsea, to a water surface, the arrangement comprising
the subsea turbine (110) arrangeable below the water surface,
a lifting body (130) having a lifting volume, wherein the lifting body (130) is coupled to the subsea turbine (110), and
at least one lifting fluid container (140) containing a compressed lifting fluid,
wherein the lifting body (130) is coupled to the at least one lifting fluid container (140) such that the lifting volume of the lifting body (130) is feedable with the lifting fluid of the at least one lifting fluid container (140) for generating a buoyancy force so that the subsea turbine (110) is lifted to the water surface.

2. The arrangement according to claim 1,
wherein the subsea turbine (110) is a subsea tidal turbine.

3. The arrangement according to claim 1 or claim 2,
wherein the at least one lifting fluid container (140) is a compressed fluid cylinder.

4. The arrangement according to any preceding claim,
wherein the lifting body (130) is formed inflatable such that the lifting volume is inflatable by the lifting fluid.

5. The arrangement according to any preceding claim,
wherein the lifting body (130) is coupled to the subsea turbine (110) by connecting straps (150).

6. The arrangement according to claims 1 to 3,
wherein the lifting body (130) is arranged within the subsea turbine (110).

7. The arrangement according to any preceding claim,
wherein the at least one lifting fluid container (140) is coupled with the lifting body (130) via a filling hose (310).

8. The arrangement according to any preceding claim,
wherein the lifting fluid is a compressed gas, in particular compressed air.

9. The arrangement according to any preceding claim,
wherein the at least one lifting fluid container (140) is attached to the subsea turbine (110).

10. The arrangement according to any preceding claim, further comprising
a further subsea turbine (410) arrangeable below the water surface,
a further lifting body (430) having a further lifting volume, wherein the further lifting body (430) is coupled to the further subsea turbine (410), and
wherein the further lifting body (430) is coupled to the at least one lifting fluid container (140) such that the lifting volume of the further lifting body (430) is feedable with the lifting fluid of the at least one lifting fluid container (140) for generating a buoyancy force so that the further subsea turbine (410) is lifted to the water surface.

11. A method for lifting a subsea turbine (110), which is arranged subsea, to a water surface, the method comprising the step of
feeding a lifting volume of a lifting body (130) with a lifting fluid of at least one lifting fluid container (140) for generating a buoyancy force so that the subsea turbine (110) is lifted to the water surface,
wherein the lifting body (130) is coupled to the subsea turbine (110), and
wherein the at least one lifting fluid container (140) contains the compressed lifting fluid.

12. The method according to claim 11, wherein the method further comprises the steps of
towing the subsea turbine (110), which has been lifted to the water surface, with a vehicle to a maintenance location and
maintaining the subsea turbine (110).

13. The method according to claims 11 and 12, wherein the method further comprises the steps of
refilling the lifting fluid into the at least one lifting fluid container (140);
emptying the lifting body (130), and
letting the subsea turbine (110) down to a subsea operation location.
